(19) Europäisches Patentamt
European Patent Office
Office européen des brevets

(11) **EP 4 763 541 A1**

(12) **EUROPEAN PATENT APPLICATION**

(43) Date of publication:
24.06.2026 Bulletin 2026/26

(21) Application number: 25215172.5

(22) Date of filing: **12.11.2025**

(51) International Patent Classification (IPC):
*B60C 23/06* (2006.01)     *G01M 17/013* (2006.01)

(52) Cooperative Patent Classification (CPC):
**B60C 23/062; G01M 17/013**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.12.2024 JP 2024220606**

(71) Applicant: **SUMITOMO RUBBER INDUSTRIES, LTD.**
**Kobe-shi, Hyogo 651-0072 (JP)**

(72) Inventor: **HORIUCHI, Shun**
**Kobe-shi, 651-0072 (JP)**

(74) Representative: **TBK**
**Bavariaring 4-6**
**80336 München (DE)**

(54) **ABNORMALITY DETECTION DEVICE, ABNORMALITY DETECTION PROGRAM, AND ABNORMALITY DETECTION METHOD**

(57)     An object is to detect an abnormality occurring in a wheel assembly, earlier, based on signals representing a rotation speed of the wheel assembly. An abnormality detection device performs frequency analysis on a first index indicating variation of the rotation speed during one rotation of the wheel assembly, to calculate a gain of each rotational order component at each time point, and calculates a total of gains of predetermined multiple rotational order components as a total gain. The abnormality detection device determines that an abnormality has occurred in the wheel assembly, if an increase rate of the total gain per predetermined time is equal to or greater than a reference increase rate.

FIG. 6

**Description**

BACKGROUND OF THE INVENTION

Field of the Invention

The present invention relates to an abnormality detection device, an abnormality detection method, and an abnormality detection program for detecting an abnormality occurring in each of a plurality of wheel assemblies included in a vehicle and specifying the wheel assembly in which the abnormality has occurred.

Background Art

It is important to detect abnormalities occurring in wheel assemblies early and take countermeasures in order to maintain proper vehicle travelling. Examples of abnormalities occurring in a wheel assembly include slight wobbling of the wheel assembly and damage to a tire. Wobbling of a wheel assembly is typically caused by loosening of wheel nuts. If a vehicle continues to travel with wheel nuts loosened, the loosening may progress over time, potentially leading to detaching of the wheel assembly. Examples of the damage to the tire include pinch cuts. A pinch cut is damage that occurs in a strength member included in the tire due to a sidewall portion being pinched between a road surface and the flange of a wheel rim when the tire receives an impact to become greatly deformed. If the degree of pinch cut is severe, the tire rapidly becomes deflated to disable travelling. If the degree of pinch cut is slight, there may be no rapid deflation, and the driver does not notice the pinch cut in some cases. However, if travelling continues in a state where such a pinch cut has occurred, a sudden puncture or burst may be caused.

For example, Japanese Laid-Open Patent Publication No. 2023-146447 discloses the following abnormality detection method for appropriately detecting an abnormality occurring in a wheel assembly based on signals representing the rotation speed of the wheel assembly. Specifically, in this abnormality detection method, first, a computer sequentially acquires signals representing the rotation speed of the wheel assembly as pulses having a rise and then calculates a first index representing the temporal variation of the rise of each of the pulses corresponding to one rotation of the wheel assembly. The computer then calculates the level (gain) of each of a plurality of rotational order components from the first index and standardizes the calculated gain of each rotational order component using "the average value and the standard deviation of the gains of the respective rotational order components when there is no abnormality". Then, the computer sets, for example, the sum of squares of the standardized gains of the respective rotational order components as a second index for determining whether or not there is an abnormality in the wheel assembly.

The inventor of the present invention has conducted studies for a method for detecting an abnormality occurring in a wheel assembly based on signals representing the rotation speed of the wheel assembly and has found the following matter. That is, the inventor of the present invention has found that by calculating the total of the gains of a plurality of rotational order components from the first index described in Japanese Laid-Open Patent Publication No. 2023-146447 and observing the temporal change of the total of the gains, whether or not there is an abnormality in the wheel assembly can be determined earlier.

The present invention has been made in view of the above circumstances in one aspect, and an object of the present invention is to provide an abnormality detection device, an abnormality detection program, and an abnormality detection method that allow an abnormality occurring in a wheel assembly to be detected earlier based on signals representing the rotation speed of the wheel assembly.

SUMMARY OF THE INVENTION

An abnormality detection device according to an aspect of the present invention is an abnormality detection device for detecting an abnormality occurring in a wheel assembly and includes a signal acquisition unit, a first index calculation unit, a spectrum calculation unit, a total gain calculation unit, and a determination unit. The signal acquisition unit is configured to sequentially acquire signals representing a rotation speed of the wheel assembly, as pulses having a rise. The first index calculation unit is configured to calculate a first index representing a temporal variation of the rise of each of the pulses corresponding to one rotation of the wheel assembly, at each time point. The spectrum calculation unit is configured to perform frequency analysis on the first index at each time point to calculate a frequency spectrum of the first index for rotational orders from a first order to an mth order (where m is an integer of 2 or more), for each time point. The total gain calculation unit is configured to calculate a total of gains of predetermined multiple rotational order components of the frequency spectrum at each time point, as a total gain at each time point. The determination unit is configured to determine that an abnormality has occurred in the wheel assembly, if an increase rate of the total gain per predetermined time calculated from the total gain at each time point is equal to or greater than a predetermined reference increase rate.

The abnormality detection device may further include a tightening time point information acquisition unit configured to acquire tightening time point information indicating a most recent tightening time point that is a time point when the wheel nut was last tightened properly. The determination unit may determine that an abnormality has occurred in a wheel nut by which a wheel of the wheel assembly is attached to a hub, as an abnormality in the wheel assembly, if the increase rate is equal to or greater than the reference increase rate. The determination unit may further determine that an abnormality has occurred in a hub bearing fixed to the hub serving as a rotation center of the wheel assembly if the total gain, at a time point when an elapsed period from the most recent tightening time point is equal to or less than a predetermined reference period, is equal to or greater than a predetermined reference value.

The abnormality detection device may further include a map information acquisition unit, a nut information acquisition unit, and a notification unit. The map information acquisition unit may be configured to acquire map information. The map information may be map information by which a position, at each time point, of a vehicle including the wheel assembly and a position of a nut repair service provider that exists within a predetermined distance from the position of the vehicle at each time point and can repair the wheel nut, can be specified. The nut information acquisition unit may be configured to acquire nut information specifying a wheel nut that can replace the wheel nut in which an abnormality has occurred. The notification unit may be configured to, if it is determined by the determination unit that an abnormality has occurred in the wheel nut, perform the following notification. That is, the notification unit may be configured to perform at least one of (1) a notification of a determination result that the abnormality has occurred in the wheel nut and the position of the nut repair service provider to an occupant of the vehicle and (2) a notification of the determination result that the abnormality has occurred in the wheel nut and the nut information to the nut repair service provider.

The abnormality detection device may further include a map information acquisition unit, a bearing information acquisition unit, and a notification unit. The map information acquisition unit may be configured to acquire map information. The map information may be map information by which a position, at each time point, of a vehicle including the wheel assembly and a position of a bearing repair service provider that exists within a predetermined distance from the position of the vehicle at each time point and can repair the hub bearing, can be specified. The bearing information acquisition unit may be configured to acquire bearing information specifying a hub bearing that can replace the hub bearing in which an abnormality has occurred. The notification unit may be configured to, if it is determined by the determination unit that an abnormality has occurred in the hub bearing, perform the following notification. That is, the notification unit may be configured to perform at least one of (1) a notification of a determination result that the abnormality has occurred in the hub bearing and the position of the bearing repair service provider to an occupant of the vehicle and (2) a notification of the determination result that the abnormality has occurred in the hub bearing and the bearing information to the bearing repair service provider.

An abnormality detection method according to an aspect of the present invention is an abnormality detection method, executed by a computer, for detecting an abnormality occurring in a wheel assembly, and includes the following. In addition, an abnormality detection program according to an aspect of the present invention is an abnormality detection program for detecting an abnormality occurring in a wheel assembly and causes a computer to execute the following.

· Sequentially acquiring signals representing a rotation speed of the wheel assembly, as pulses having a rise.
· Calculating a first index representing a temporal variation of the rise of each of the pulses corresponding to one rotation of the wheel assembly, at each time point.
· Performing frequency analysis on the first index at each time point to calculate a frequency spectrum of the first index for rotational orders from a first order to an mth order (where m is an integer of 2 or more), for each time point.
· Calculating a total of gains of predetermined multiple rotational order components of the frequency spectrum at each time point, as a total gain at each time point.
· Determining that an abnormality has occurred in the wheel assembly, if an increase rate of the total gain per predetermined time calculated from the total gain at each time point is equal to or greater than a predetermined reference increase rate.

In the present invention, signals representing a rotation speed of the wheel assembly are sequentially acquired as pulses having a rise, and a first index representing a temporal variation of the rise of each of the pulses corresponding to one rotation of the wheel assembly is calculated at each time point. Then, in the present invention, frequency analysis on the first index at each time point is performed to calculate a frequency spectrum of the first index for rotational orders from a first order to an mth order (where m is an integer of 2 or more), for each time point, and a total of gains of predetermined multiple rotational order components of the frequency spectrum at each time point is calculated as a total gain at each time point. Here, the inventor of the present invention has found that by observing the temporal change of the total of gains at each time point, whether or not there is an abnormality in the wheel assembly can be determined earlier. Therefore, in the present invention, if an increase rate of the total gain per predetermined time calculated from the total gain at each time point is equal to or greater than a predetermined reference increase rate, it is determined that an abnormality has occurred in the wheel assembly. Therefore, according to the present invention, an abnormality occurring in the wheel assembly can be detected earlier based on signals representing the rotation speed of the wheel assembly.

BRIEF DESCRIPTION OF THE DRAWINGS

FIG. 1 is a schematic diagram showing a schematic configuration of a vehicle including an abnormality detection device according to an embodiment of the present invention;
FIG. 2 is a block diagram showing the electrical configuration of the abnormality detection device;
FIG. 3 is a flowchart showing the flow of abnormality detection processing;
FIG. 4 is a flowchart showing the flow of the abnormality detection processing;
FIG. 5 is a flowchart showing the flow of abnormality notification processing;
FIG. 6 shows an example of the gain of the frequency spectrum of a first index for the rotational order in the cases where no abnormality has occurred and where an abnormality has occurred in a wheel assembly;
FIG. 7 shows an example of determining an abnormality in the wheel assembly based on the temporal change of a total gain;
FIG. 8 shows an example of abnormality detection timings in the case where the total gain itself is compared with a threshold value to detect an abnormality and the case where an abnormality is detected based on an increase rate of the total gain per predetermined time;
FIG. 9 shows an example showing that a threshold value needs to be set for each wheel assembly in the case where an abnormality is detected based on the total gain itself;
FIG. 10 shows an example of a method for detecting an abnormality in a hub bearing; and
FIG. 11 illustrates pulses acquired from a rotation speed sensor.

DETAILED DESCRIPTION

Hereinafter, an abnormality detection device, an abnormality detection program, and an abnormality detection method according to an embodiment of the present invention will be described with reference to the drawings.

<1. Outline>

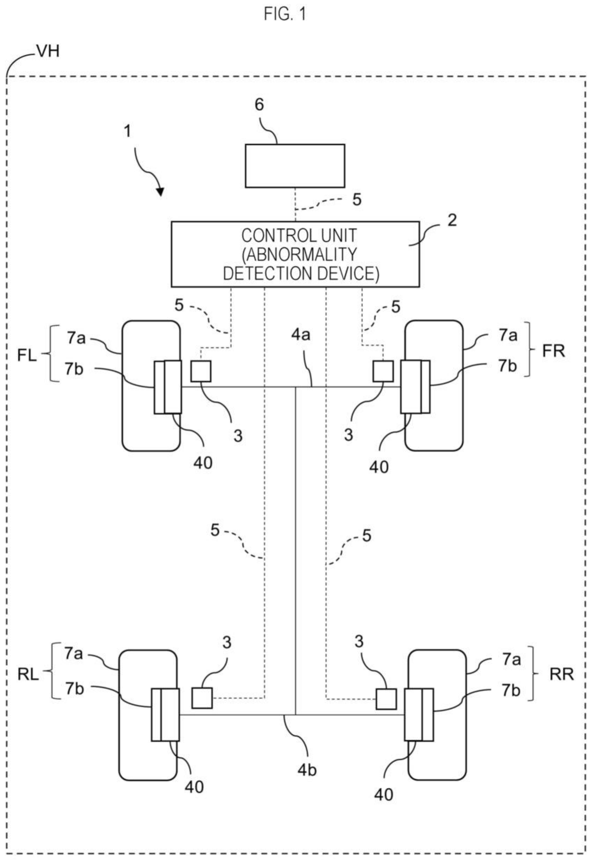

FIG. 1 is a schematic diagram showing a situation in which an abnormality detection system 1 according to the present embodiment is installed in a vehicle VH. The vehicle VH is a four-wheeled vehicle and includes a left front wheel assembly FL, a right front wheel assembly FR, a left rear wheel assembly RL, and a right rear wheel assembly RR. The vehicle VH includes a front axle 4a and a rear axle 4b, and the wheel assemblies FL, FR, RL, and RR are attached to hub units 40 fixed to the left and right ends of the front and rear axles 4a and 4b, respectively. In the present embodiment, when there is no particular need to distinguish between the left front wheel assembly FL, the right front wheel assembly FR, the left rear wheel assembly RL, and the right rear wheel assembly RR, these wheel assemblies are sometimes referred to simply as "wheel assemblies". Similarly, when there is no particular need to distinguish between the front axle 4a and the rear axle 4b, these axles are sometimes referred to simply as "axles".
Each hub unit 40 is, for example, a wheel assembly support structure that rotatably supports a wheel assembly. Each hub unit 40 according to the present embodiment includes a hub that serves as the rotational center of the wheel assembly and a hub bearing that is fixed to the hub. The hub is a ring-shaped member to which the wheel assembly is attached and rotates integrally with the wheel assembly. The hub bearing is a bearing that supports the hub such that the hub is rotatable relative to the axle. In the hub unit 40, the hub and the hub bearing may be integrally formed, and the hub bearing formed integrally with the hub may rotatably support the wheel assembly.
The wheel assemblies FL, FR, RL, and RR each include a wheel 7b and a tire 7a fitted thereon. Each wheel 7b is attached and fixed to the hub unit 40 (in particular, the hub of the hub unit 40) by means of a fixing member which is not shown. The fixing member is, typically, a plurality of wheel nuts each having a screw thread. By engaging the fixing members with hub bolts (not shown) on the hub unit 40 side and appropriately tightening the screws, the respective wheel assemblies are fixed to the hub units 40 without loosening relative to the hub units 40.
The abnormality detection system 1 includes a control unit 2 serving as an abnormality detection device and a sensor unit 3 that detects information representing the rotation speeds of the wheel assemblies FL, FR, RL, and RR. The control unit 2 has a function of: detecting whether or not there is an abnormality occurring in at least one of the wheel assemblies FL, FR, RL, and RR, based on signals outputted from the sensor unit 3; and if an abnormality is detected, giving a warning regarding the abnormality to a driver, etc., via a display device 6 included in the vehicle VH. When the control unit 2 detects an abnormality in at least one of the wheel assemblies FL, FR, RL, and RR, the control unit 2 may identify the wheel assembly in which the abnormality has occurred (abnormal wheel assembly) and may notify the driver, etc., of the identified abnormal wheel assembly via the display device 6 included in the vehicle VH.
Examples of abnormalities that may occur in the wheel assemblies FL, FR, RL, and RR include at least one of wobbling of the wheel assemblies and damage to the tires 7a included in the wheel assemblies. Examples of factors causing wobbling of the wheel assemblies include damage to the hub bolts, damage to the wheel nuts, loosening of the wheel nuts, and damage to (failure of) the hub bearings. The most typical factor is loosening of the wheel nuts, followed by failure of the hub bearings, etc. When the wheel 7b is normally fixed to the hub unit 40, there is no damage to the wheel nuts, the hub bolts, and the hub bearing, and the wheel nuts and the hub bolts are tightened with an appropriate torque. If loosening occurs between the wheel nuts and the hub bolt, mechanical play occurs between the wheel 7b and the hub unit 40, causing the wheel assembly to wobble. Similarly, if a failure of the hub bearing occurs, for example, mechanical play or the like occurs between the wheel 7b and the hub unit 40, causing the wheel assembly to wobble. Then, if the vehicle VH continues to travel with the wheel nuts loosened, vibrations applied to the wheel assembly may cause the wheel nuts to loosen further, eventually causing the wheel nuts to come off the hub bolts and the wheel assembly to fall off the hub unit 40 (resulting in wheel assembly detachment). Additionally, if a failure of the hub bearing is left unaddressed and the vehicle VH continues to travel, the vibrations of a vehicle body may be increased, it may become difficult to steer the vehicle VH, the vehicle VH may sway and fail to travel straight, or the wheel assembly may fall off the hub unit 40. Therefore, it is important to discover wobbling of the wheel assembly early and eliminate the cause of the wobbling.

Meanwhile, typical damage to the tire 7a is a pinch cut that occurs during traveling. A pinch cut is cutting of a strength member inside the tire 7a due to the tire 7a becoming significantly deformed by an impact from unevenness of a road surface or an obstacle, and a sidewall portion being caught (pinched) between the flange of a wheel rim and the road surface or the obstacle. The strength member is typically a carcass cord constituting a carcass inside the tire 7a. Cutting of the carcass cord is not repairable and the tire 7a itself needs to be replaced. If a serious pinch cut occurs, a rubber is also cut together with the carcass cord due to pinching, and the tire 7a rapidly becomes deflated, causing the vehicle VH to be unable to travel.

On the other hand, if a slight pinch cut occurs, the rubber is not cut, and the air pressure is maintained, so that the driver is less likely to notice the pinch cut. However, even in the case of a slight pinch cut, continuing to travel may cause the tire to suddenly puncture or burst, so that it is necessary to discover the pinch cut early and replace the tire 7a. With the abnormality detection system 1, it is possible to detect a pinch cut and give a warning regarding the pinch cut regardless of the degree of the pinch cut, and it is more important to detect a slight pinch cut, which is less likely to be noticed by the driver, and give a warning regarding the pinch cut.

Therefore, the control unit 2 determines whether or not an abnormality has occurred in each of the plurality of wheel assemblies included in the vehicle VH, and if the control unit 2 determines that an abnormality has occurred in at least one wheel assembly, the control unit 2 notifies the occupant(s) of the vehicle VH, etc., of this abnormality and encourages the occupant(s), etc., to repair this abnormality, for example. In particular, as abnormalities occurring in each wheel assembly, the control unit 2 distinguishes between an "abnormality occurring in a wheel nut for attaching the wheel 7b of the wheel assembly to the hub" and an "abnormality occurring in the hub bearing fixed to the hub serving as the rotational center of the wheel assembly". For example, if the control unit 2 determines that an abnormality has occurred in a wheel assembly at a "time point when an elapsed period from a most recent tightening time point TMS that is a time point when the wheel nuts were last tightened properly is equal to or less than a predetermined reference period (bearing determination reference period RPB)", the control unit 2 executes the following processing. Specifically, the control unit 2 determines that the "abnormality that has occurred in the wheel assembly" is not an "abnormality that has occurred in a wheel nut" but an "abnormality that has occurred in the hub bearing". Then, if the control unit 2 determines that an abnormality has occurred in the hub bearing, the control unit 2 distinguishes this abnormality from an "abnormality that has occurred in a wheel nut" and notifies the occupant(s) of the vehicle VH (e.g., the driver, etc.), etc., of this abnormality. That is, the control unit 2 distinguishes between an "abnormality that has occurred in a wheel nut" and an "abnormality that has occurred in the hub bearing" and notifies the driver, etc., of the occurrence of such abnormalities. Therefore, the driver, etc., can appropriately grasp the location where repair, replacement, retightening, etc., are to be performed.

In addition, if the control unit 2 detects an abnormality in a wheel assembly, the control unit 2 may transmit information regarding the occurrence of the abnormality and information useful for repairing the abnormality to a maintenance shop or the like that can repair the abnormality. For example, if the control unit 2 detects an abnormality in a wheel nut, the control unit 2 may transmit information regarding the occurrence of the abnormality and nut information IN specifying a wheel nut that can replace the wheel nut in which the abnormality has occurred, to a nut repair service provider SPN or the like that can repair the abnormality. For example, if the control unit 2 detects an abnormality in a hub bearing, the control unit 2 may transmit information regarding the occurrence of the abnormality and bearing information IB specifying a hub bearing that can replace the hub bearing in which the abnormality has occurred, to a bearing repair service provider SPB or the like that can repair the abnormality. By receiving such information from the control unit 2, the maintenance shop (at least one of the nut repair service provider SPN and the bearing repair service provider SPB) can grasp in advance that there may be a request from the occupant(s) of the vehicle VH for repair, replacement, or the like of the wheel assembly (at least either the wheel nuts or the hub bearing) in which the abnormality has occurred. In addition, by receiving such information, the maintenance shop can prepare in advance parts required for repair, replacement, or the like and can promptly perform repair, replacement, or the like when a request is received.

<2. Abnormality Detection System>

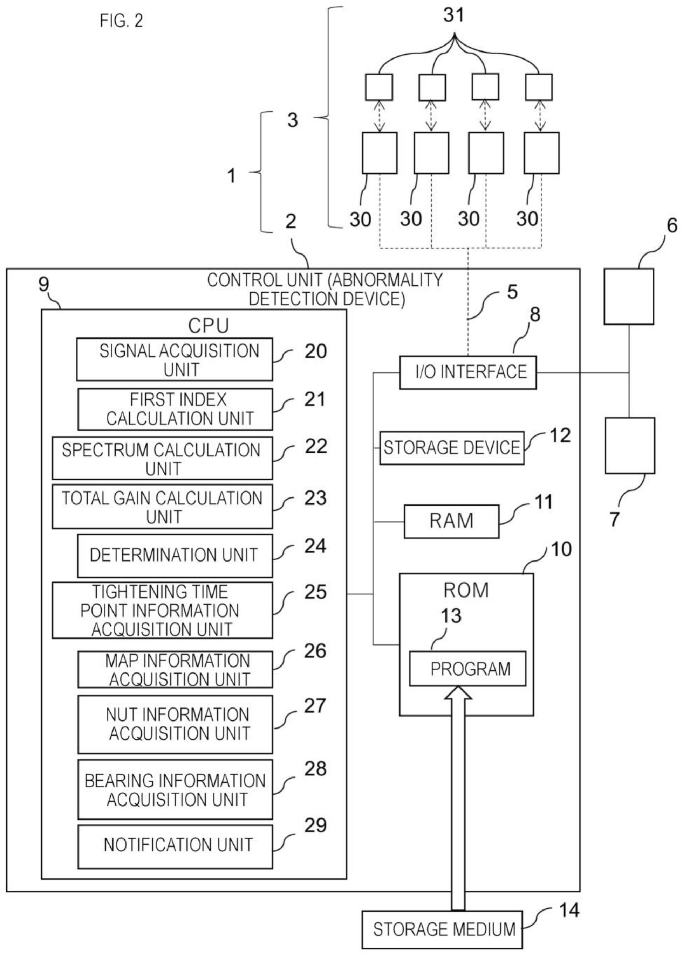

FIG. 2 is a block diagram showing the electrical configuration of the abnormality detection system 1. Hereinafter, each component of the abnormality detection system 1 will be described.

[Control Unit]

The control unit 2 is an in-vehicle computer as hardware and includes an I/O interface 8, a CPU (Central Processing Unit) 9, a ROM (Read Only Memory) 10, a RAM (Random Access Memory) 11, and a nonvolatile rewritable storage device 12. The I/O interface 8 is a communication device for communicating with external devices such as the sensor unit 3, the display device 6, a communication device 7, and an ECU (Electronic Control Unit, in-vehicle control device) included in the vehicle VH and not shown. A program 13 for controlling the operation of each unit of the vehicle VH is stored in the ROM 10. The program 13 is written from a storage medium 14 such as a CD-ROM into the ROM 10. The CPU 9 reads out the program 13 from the ROM 10 and executes the program 13, thereby virtually operating as a signal acquisition unit 20, a first index calculation unit 21, a spectrum calculation unit 22, a total gain calculation unit 23, a determination unit 24, a tightening time point information acquisition unit 25, a map information acquisition unit 26, a nut information acquisition unit 27, a bearing information acquisition unit 28, and a notification unit 29. The details of the operation of the units 20 to 29 will be described later. The storage device 12 is composed of a hard disk, a flash memory, or the like. The program 13 may be stored in the storage device 12 instead of the ROM 10. The RAM 11 and the storage device 12 are used as appropriate for calculation performed by the CPU 9. For example, information such as a reference increase rate RRI, the bearing determination reference period RPB, and a bearing determination reference value RVB which are used by the control unit 2 to detect an abnormality in a wheel assembly may be stored (saved) in advance in at least one of the RAM 11 and the storage device 12. The details of each piece of information will be described later.

[Sensor Unit]

The sensor unit 3 includes four rotating bodies 31 that rotate together with the wheel assemblies FL, FR, RL, and RR, respectively, and four sensors 30 that continuously detect physical quantities changed by the rotating bodies 31 and output detection signals. The positions at which the rotating bodies 31 are attached are not particularly limited as long as the rotating bodies 31 are attached so as to be rotatable together with the respective wheel assemblies about the rotation axes of the respective wheel assemblies. The sensors 30 are attached to non-rotating portions of the vehicle body in the vicinity of the corresponding rotating bodies 31. Each sensor 30 is connected to the control unit 2 via a communication line 5.

Each rotating body 31 is a gear composed of a magnetic material in the present embodiment but is not limited to this. Each sensor 30 is a magnetic field sensor including a permanent magnet and a coil in the present embodiment but is not limited to this. Each sensor 30 is fixed to the vehicle body so as to face the side circumferential surface of the rotating body 31. The magnetic field generated by the permanent magnet of the sensor 30 changes as the rotating body 31 rotates and the teeth pass sequentially in front of the sensor 30, thereby generating a dielectric electromotive force in the coil. The waveform of the dielectric electromotive force is a sine wave whose frequency is proportional to the rotation speed of the rotating body 31. This sine wave has the same number of cycles as the number of teeth (N) of the rotating body 31, and one cycle corresponds to one rotation of the wheel assembly. The sensor 30 outputs a sine wave signal based on the dielectric electromotive force, to the control unit 2 in real time, as a signal representing the rotation speed of the wheel assembly.

[Display Device]

The display device 6 can be realized by any form such as a liquid crystal display element, a liquid crystal monitor, a plasma display, and an organic EL (Electro-Luminescence) display, as long as the display device 6 can notify the driver that an abnormality has occurred in at least one wheel assembly. The abnormality includes at least one of an abnormality that has occurred in a wheel nut and an abnormality that has occurred in a hub bearing. The display device 6 can distinguish between an abnormality that has occurred in a wheel nut and an abnormality that has occurred in a hub bearing and notify the occupant(s) of the vehicle VH such as the driver of such abnormalities. In addition to notifying that an "abnormality has occurred in at least one wheel assembly", the display device 6 may notify the driver of information identifying the wheel assembly in which the abnormality has occurred (abnormal wheel assembly). The abnormal wheel assembly may be a wheel assembly in which an abnormality has occurred in at least one of the wheel nut and the hub bearing. For example, the display device 6 can be configured to have four lamps that respectively correspond to the wheel assemblies FL, FR, RL, and RR and are arranged in accordance with the actual arrangement of the wheel assemblies. The display device 6 may, for example, control the light-emitting state of each lamp in accordance with a control signal from the control unit 2 to distinguish a wheel assembly in which an abnormality has occurred from the wheel assemblies in which no abnormality has occurred and notify the driver of this wheel assembly. The position at which the display device 6 is attached may be selected as appropriate but it is preferable that the display device 6 is provided, for example, at a position, such as on an instrument panel, that is easily recognized by the driver. In the case where the control unit 2 is connected to a car navigation system, a monitor for car navigation can also be used as the display device 6. The warning can be outputted through the display device 6 in a form such as an icon or textual information. Additionally, the warning may also be outputted in a form such as voice or warning sound via a speaker installed in the vehicle VH.

[Communication Device]

The communication device 7 is a wireless communication device that can realize communication with a maintenance shop or the like that can repair a wheel assembly of the vehicle VH in which an abnormality has occurred. The communication device 7 according to the present embodiment executes communication with the maintenance shop or the like in accordance with an instruction of the control unit 2 and transmits information indicating that an abnormality has occurred in a wheel assembly of the vehicle VH and information useful for repairing this abnormality, to the maintenance shop or the like. For example, when the control unit 2 detects an abnormality in a wheel nut, the communication device 7 transmits a determination result that the abnormality has occurred in the wheel nut and the nut information IN to the nut repair service provider SPN or the like in accordance with an instruction of the control unit 2. For example, when the control unit 2 detects an abnormality in a hub bearing, the communication device 7 transmits a determination result that the abnormality has occurred in the hub bearing and the bearing information IB to the bearing repair service provider SPB or the like in accordance with an instruction of the control unit 2.

[ECU]

The vehicle VH further includes an ECU which is not shown. The ECU is, for example, an information system ECU that controls a navigation system. The control unit 2 can communicate with the information system ECU, for example, via a CAN (Controller Area Network) or another in-vehicle network and can receive map information MPI from the information system ECU. The map information MPI is information by which the position of the vehicle VH at each time point and the position of a maintenance shop existing within a predetermined distance from the position of the vehicle VH at each time point can be specified. The map information MPI is information by which the position of at least one of the nut repair service provider SPN and the bearing repair service provider SPB existing within a predetermined distance from the position of the vehicle VH at each time point can be specified as the position of the maintenance shop.
The vehicle VH may include a management system ECU that manages maintenance information MTI related to maintenance, servicing, etc., of each part of the vehicle VH, in addition to the information system ECU. The maintenance information MTI includes, for example, the following information as information related to maintenance, servicing, etc., of a plurality of wheel nuts included in the vehicle VH. That is, the maintenance information MTI includes information (tightening time point information IT) indicating the most recent tightening time point TMS which is a time point when the wheel nuts of the vehicle VH were last tightened properly and the nut information IN specifying a wheel nut that can replace each wheel nut of the vehicle VH. The nut information IN indicates, for example, the size, material, type, product number, etc., of each of the plurality of wheel nuts included in the vehicle VH. Similarly, the maintenance information MTI includes, for example, the bearing information IB specifying a hub bearing that can replace each hub bearing of the vehicle VH, as information related to maintenance, servicing, etc., of each of a plurality of hub bearings included in the vehicle VH. The bearing information IB indicates, for example, the size, material, type, product number, etc., of each of the plurality of hub bearings included in the vehicle VH. The control unit 2 can communicate with the management system ECU via the in-vehicle network and receive the tightening time point information IT, the nut information IN, and the bearing information IB from the management system ECU. The maintenance information MTI may be registered and updated by at least one of the occupant(s) of the vehicle VH (e.g., the driver), the managing person of the vehicle VH, the maintenance shop, the manufacturer of the vehicle VH (automobile manufacturer), the manufacturer of each part of the vehicle VH, etc.

<3. Abnormality Detection Processing>

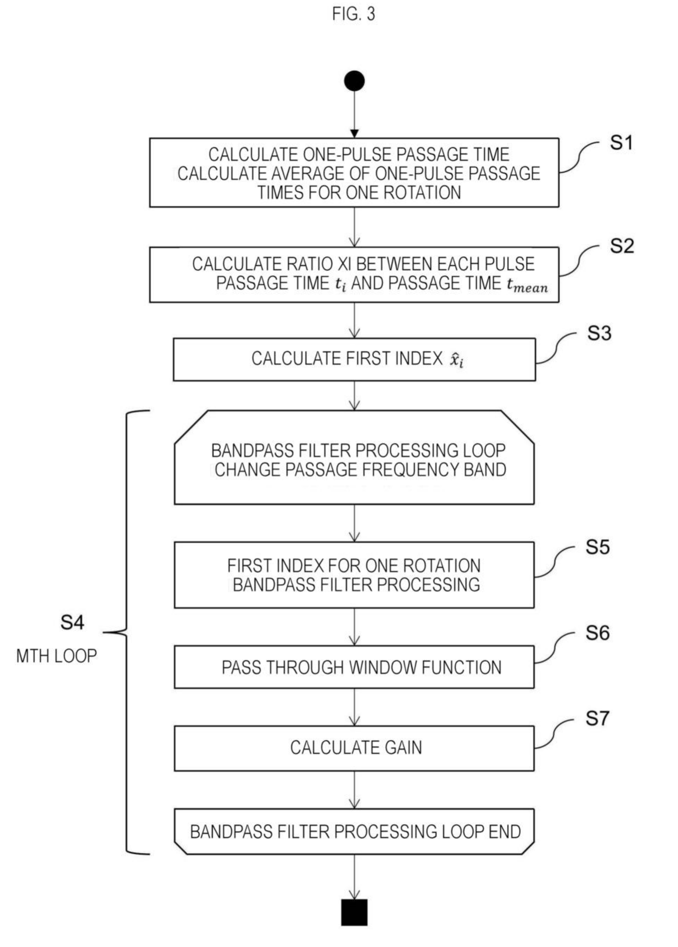

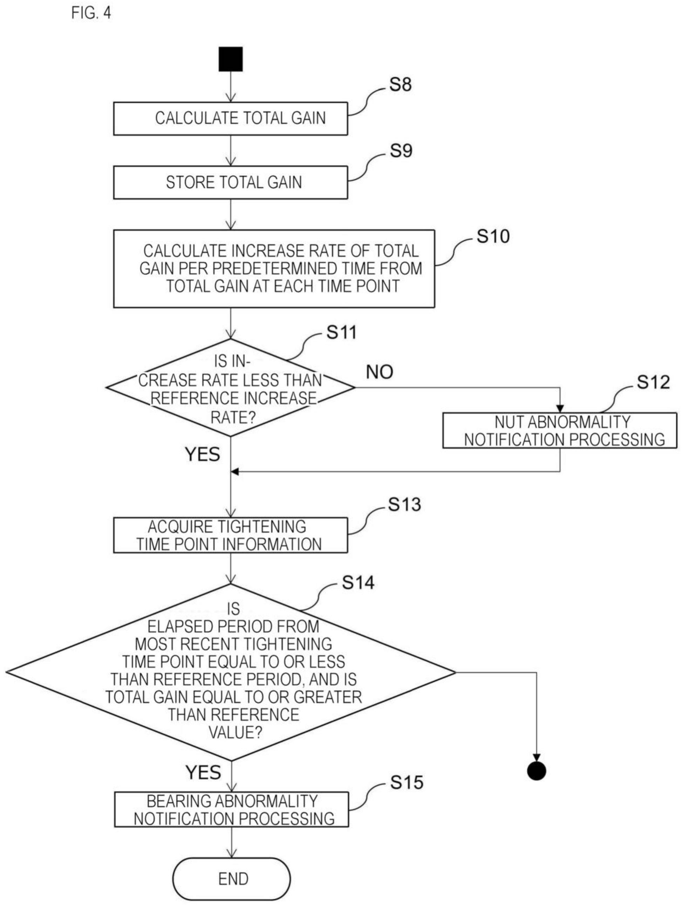

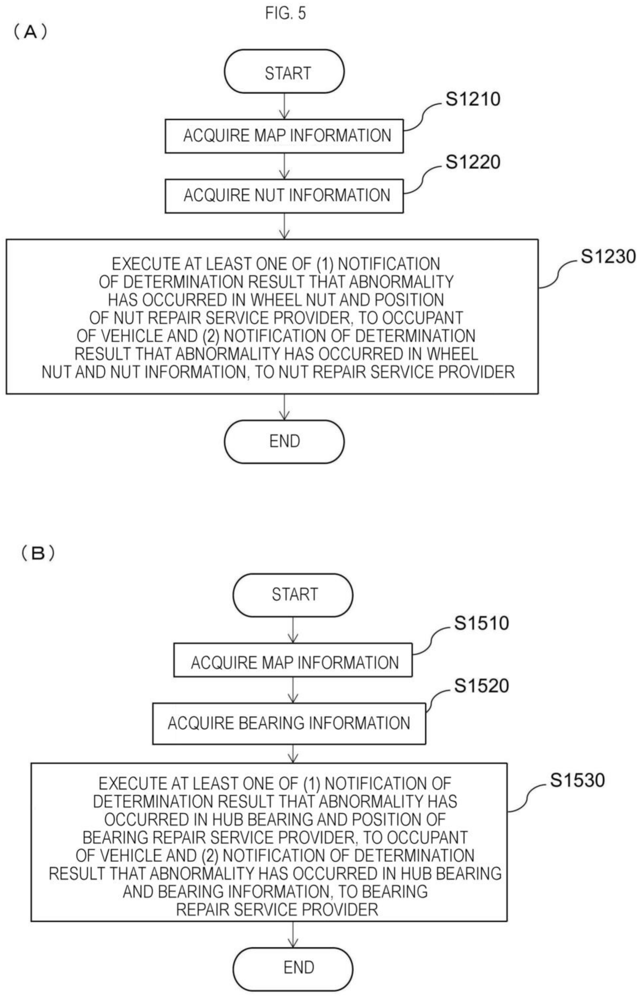

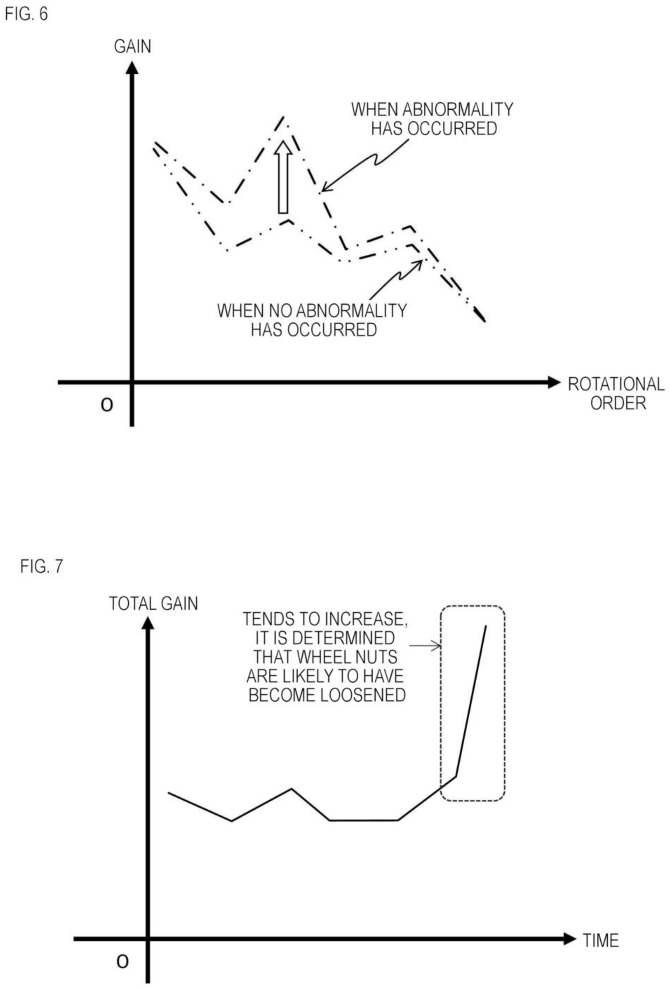

Hereinafter, an abnormality detection method, executed by the abnormality detection system 1 according to the present embodiment, for detecting abnormalities in the wheel assemblies FL, FR, RL, and RR will be described. FIG. 3 and FIG. 4 are flowcharts showing the flow of abnormality detection processing. FIG. 5 is a flowchart showing the flow of abnormality notification processing executed by the abnormality detection system 1 (in particular, control unit 2) when it is determined that an "abnormality has occurred in at least one of the wheel assemblies FL, FR, RL, and RR" in the abnormality detection processing. Specifically, FIG. 5(A) is a flowchart showing the flow of nut abnormality notification processing executed when it is determined that an abnormality has occurred in a wheel nut of at least one wheel assembly. FIG. 5(B) is a flowchart showing the flow of bearing abnormality notification processing executed when it is determined that an abnormality has occurred in the hub bearing of at least one wheel assembly. Here, to facilitate understanding of the abnormality detection system 1 (in particular, control unit 2), first, the outline of the control unit 2 will be described with reference to FIG. 6 to FIG. 10.

(Abnormality Detection Method)

The control unit 2 sequentially acquires signals representing the rotation speed of each wheel assembly, as pulses having a rise, and calculates a first index representing the temporal variation of the rise of each of the pulses corresponding to one rotation of the wheel assembly, at each time point. Next, the control unit 2 calculates a total gain TG at each time point from the first index at each time point. That is, the control unit 2 performs frequency analysis on the first index at each time point to calculate the frequency spectrum of the first index for rotational orders from the first order to an mth order for each time point. In the present embodiment, m is an integer of 2 or more. Then, the control unit 2 calculates the total of gains $G_j$ (j is an integer from 1 to m) of predetermined multiple rotational order components of the frequency spectrum at each time point, as the total gain TG at each time point. If an increase rate RGI of the total gain TG per predetermined time PT calculated from the total gain TG at each time point is equal to or greater than a predetermined reference increase rate RRI, the control unit 2 determines that an abnormality has occurred in the wheel assembly.

Here, if an abnormality occurs in the wheel assembly, the gain $G_j$ calculated for each rotational order from the first index changes from that when no abnormality has occurred, and becomes larger than that when no abnormality has occurred, as shown in FIG. 6, for example. However, in the example shown in FIG. 6, depending on the rotational order, there are cases where a change in the gain $G_j$ is small between when an abnormality has occurred in the wheel assembly and when no abnormality has occurred, and there are cases where almost no change is seen therebetween, for example. Therefore, the control unit 2 calculates the total of gains $G_j$ of the predetermined multiple rotational order components as the total gain TG and determines whether or not an abnormality has occurred in the wheel assembly, using the total gain TG.

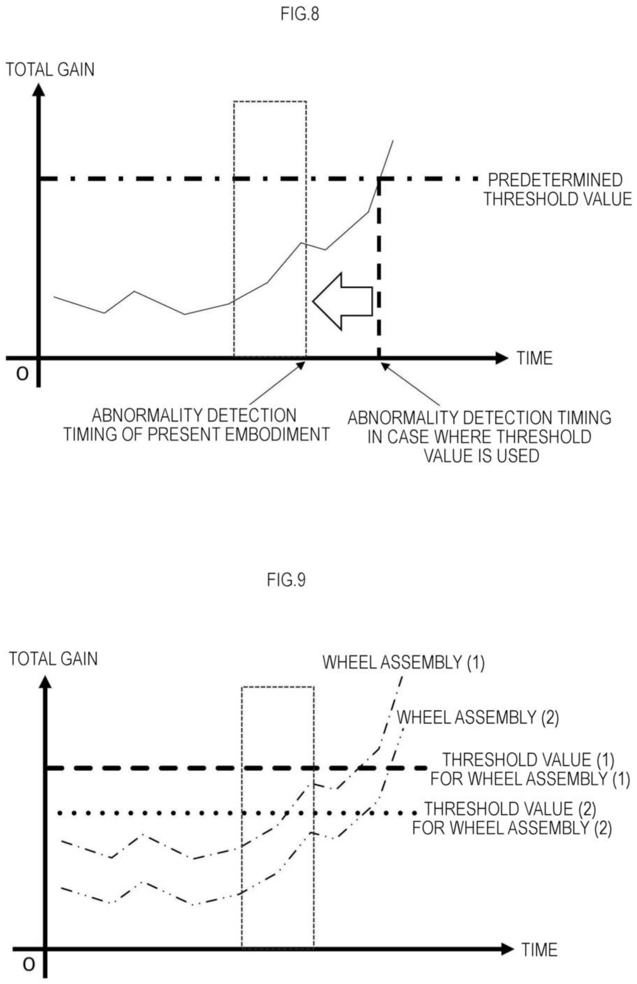

In particular, the control unit 2 observes the temporal change of the total gain TG to detect an abnormality occurring in the wheel assembly. For example, if the total gain TG tends to increase as shown in FIG. 7, the control unit 2 determines that an abnormality has occurred in the wheel assembly, and in the shown example, determines that the wheel nuts are likely to have become loosened. In the present embodiment, if the increase rate RGI of the total gain TG per predetermined time PT calculated from the total gain TG at each time point is equal to or greater than the reference increase rate RRI, the control unit 2 determines that an abnormality has occurred in the wheel assembly. Through this processing, the control unit 2 achieves the effects illustrated in FIG. 8 and FIG. 9.

As described above, if an abnormality occurs in the wheel assembly, the gain $G_j$ calculated for each rotational order from the first index becomes larger than that when no abnormality has occurred. Therefore, as illustrated in FIG. 8, the total gain TG, which is the total of the gains $G_j$ of the predetermined multiple rotational order components, is compared with a predetermined threshold value, and if the total gain TG becomes equal to or greater than the threshold value, it can also be determined that an abnormality has occurred in the wheel assembly. However, the inventor of the present invention has found that by observing the temporal change of the total gain TG at each time point, whether or not there is an abnormality in a wheel assembly can be determined earlier. That is, the inventor of the present invention has found that by observing the increase rate RGI of the total gain TG per predetermined time PT instead of "comparing the total gain TG itself with a predetermined threshold value", whether or not there is an abnormality in a wheel assembly can be determined earlier. Specifically, by determining that an abnormality has occurred in the wheel assembly if the increase rate RGI becomes equal to or greater than the reference increase rate RRI as shown in FIG. 8, whether or not there is an abnormality in the wheel assembly can be determined earlier than in the case where "it is determined that an abnormality has occurred in the wheel assembly if the total gain TG becomes equal to or greater than a threshold value". In the example shown in FIG. 8, the abnormality detection timing of the present embodiment (abnormality detection timing in the case where the increase rate RGI is compared with the reference increase rate RRI to detect an abnormality) is significantly earlier than an "abnormality detection timing in the case where a threshold value is used (abnormality detection timing in the case where the total gain TG itself is compared with a predetermined threshold value to detect an abnormality). Therefore, the "control unit 2 which determines that an abnormality has occurred in the wheel assembly if the increase rate RGI of the total gain TG per predetermined time PT calculated from the total gain TG at each time point is equal to or greater than the reference increase rate RRI" can detect an abnormality occurring in a wheel assembly, earlier.

The gain $G_j$ for each rotational order is calculated from the first index for each wheel assembly, that is, calculated for each wheel assembly. Then, the first index for each wheel assembly is considered to be influenced by factors specific to each wheel assembly, and such influences appear, for example, as the number of teeth N of each rotating body 31, which rotates together with each wheel assembly, that is, as the number of pulses for one rotation of the wheel assembly. Therefore, the "gain $G_j$ for each rotational order" is also considered to depend on each wheel assembly (in particular, the number of teeth N of the rotating body 31 for each wheel assembly) (in other words, considered to be influenced by factors specific to each wheel assembly). Naturally, the total gain TG, which is the total of the gains $G_j$ of the predetermined multiple rotational order components, is also considered to depend on the wheel assembly, that is, to be influenced by factors specific to each wheel assembly. Therefore, in the case where the total gain TG itself is compared with a predetermined threshold value to detect an abnormality in the wheel assembly, since the total gain TG depends on the wheel assembly, the threshold value used for comparison with the total gain TG for each wheel assembly also needs to be set for each wheel assembly. In the example shown in FIG. 9, a threshold value (1) used for comparison with a total gain TG (1) for a wheel assembly (1) is a threshold value that can be used only for determining an abnormality in the wheel assembly (1) and is a threshold value set for the wheel assembly (1). Similarly, a threshold value (2) used for comparison with a total gain TG (2) for a wheel assembly (2) is a threshold value that can be used only for determining an abnormality in the wheel assembly (2) and is a threshold value set for the wheel assembly (2). Therefore, as illustrated in FIG. 9, the threshold value (1) and the threshold value (2) are different values.

In contrast, the increase rate RGI of the total gain TG per predetermined time PT calculated from the total gain TG at each time point does not depend on the wheel assembly. The increase rate RGI is the change amount of the total gain TG at each time point per predetermined time PT but is not the total gain TG itself at each time point and therefore does not depend on the wheel assembly. FIG. 9 illustrates an example in which, when an abnormality occurs in each of the wheel assembly (1) and the wheel assembly (2), the total gain TG (1) for the wheel assembly (1) and the total gain TG (2) for the wheel assembly (2) show similar temporal changes. That is, when an abnormality occurs in a wheel assembly, the increase rate RGI of the total gain TG per predetermined time PT for this wheel assembly does not depend on the wheel assembly and is similar. Therefore, the reference increase rate RRI used for comparison with the increase rate RGI can also be determined without depending on the wheel assembly. Therefore, the control unit 2 can determine whether or not an abnormality has occurred in each wheel assembly, by comparing the increase rate RGI of the total gain TG for each wheel assembly with the reference increase rate RRI which is common for the plurality of wheel assemblies.

The reference increase rate RRI can be used for determining whether or not there is an abnormality not only for each of a "plurality of wheel assemblies" included in one vehicle (vehicle VH in the present embodiment) but also for each of a "plurality of wheel assemblies" included in each of a plurality of vehicles. For example, the reference increase rate RRI can also be used for determining whether or not there is an abnormality for each of a "plurality of wheel assemblies" included in a vehicle different from the vehicle VH. That is, the reference increase rate RRI used by the control unit 2 as a "value in a predetermined range that is common for a plurality of wheel assemblies and does not depend on the wheel assembly" is a value that can be shared and used for a plurality of vehicles and a plurality of wheel assemblies. The control unit 2 can determine whether or not there is an abnormality for each of a "plurality of wheel assemblies" of each of a plurality of vehicles, using the common reference increase rate RRI.

(Abnormality Detection Targets)

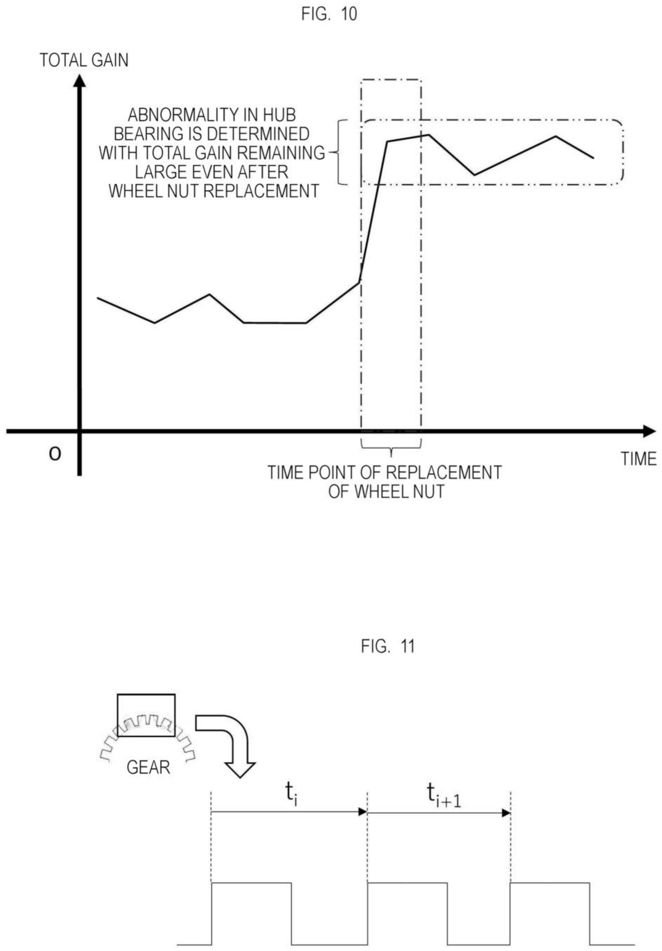

The control unit 2 detects abnormalities in the wheel assemblies, and in particular, the control unit 2 distinguishes between and detects "abnormalities occurring in the wheel nuts" and "abnormalities occurring in the hub bearings". The control unit 2 grasps the "most recent tightening time point TMS which is a time point when the wheel nuts were last tightened properly" such as a time point when the wheel nuts were replaced. Then, if, for example, the total gain TG remains large even after the replacement of the wheel nuts as illustrated in FIG. 10, the control unit 2 determines that an abnormality has occurred in the hub bearing. In the present embodiment, if the total gain TG is equal to or greater than a predetermined reference value (bearing determination reference value RVB) at a time point when the elapsed period from the most recent tightening time point TMS is equal to or less than the bearing determination reference period RPB, the control unit 2 determines that an abnormality has occurred in the hub bearing.

As described above, by comparing the increase rate RGI of the total gain TG with the reference increase rate RRI, the control unit 2 can detect an abnormality occurring in the wheel assembly, earlier than in the case where the total gain TG itself is compared with a predetermined threshold value. A typical cause of an abnormality such as wobbling of a wheel assembly is an "abnormality occurring in a wheel nut" such as loosening of the wheel nut. Therefore, in the present embodiment, if the increase rate RGI is equal to or greater than the reference increase rate RRI, the control unit 2 determines that, for example, an "abnormality has occurred in the wheel nut" as an abnormality in the wheel assembly. Owing to this determination, the control unit 2 can detect an "abnormality occurring in the wheel nut" for which a cause is typical as a cause of an abnormality in the wheel assembly, earlier than in the case where the total gain TG itself is compared with a predetermined threshold value.

Furthermore, since the wheel nuts were tightened properly at the most recent tightening time point TMS, if an abnormality in the wheel assembly is detected at a time point that is not long after the most recent tightening time point TMS, the cause of the abnormality is considered to be other than an "abnormality in a wheel nut". Therefore, if the total gain TG is equal to or greater than the bearing determination reference value RVB at a time point when the elapsed period from the most recent tightening time point TMS is equal to or less than the bearing determination reference period RPB, the control unit 2 determines that an abnormality has occurred in the hub bearing and notifies the occupant(s) of the vehicle VH, etc., of the occurrence of the abnormality. Through this processing, if an abnormality in a wheel assembly that is considered to have occurred due to a cause other than an "abnormality in a wheel nut" is detected, the control unit 2 can alert the occupant(s), etc., to the possibility of an "abnormality in the hub bearing" that may lead to serious consequences.

In particular, when detecting an abnormality in the hub bearing, the control unit 2 uses the total gain TG rather than the "increase rate RGI of the total gain TG per predetermined time PT calculated from the total gain TG at each time point", which is used for detecting an abnormality in a wheel nut. Specifically, the control unit 2 determines whether or not an abnormality has occurred in the hub bearing, using the "total gain TG at a time point when the elapsed period from the most recent tightening time point TMS is equal to or less than the bearing determination reference period RPB" rather than the "increase rate RGI of the total gain TG".

Here, since the "increase rate RGI of the total gain TG" is the "increase rate RGI of the total gain TG per predetermined time PT", the elapse of the "predetermined time PT" is necessary in order to calculate the "increase rate RGI of the total gain TG" from the total gain TG at each time point. However, at a "time point when the elapsed period from the most recent tightening time point TMS is equal to or less than the bearing determination reference period RPB", if no abnormality has occurred, the total gain TG should be sufficiently small. Therefore, at a "time point when the elapsed period from the most recent tightening time point TMS is equal to or less than the bearing determination reference period RPB", if the total gain TG is large, the control unit 2 determines that an abnormality has occurred in the wheel assembly, without waiting for the above-described elapse of the "predetermined time PT". Specifically, if the total gain TG at a "time point when the elapsed period from the most recent tightening time point TMS is equal to or less than the bearing determination reference period RPB" is equal to or greater than the bearing determination reference value RVB, the control unit 2 determines that an abnormality has occurred in the hub bearing. Through this processing, the control unit 2 can detect an abnormality in the hub bearing, earlier than when the above-described elapse of the "predetermined time PT" is waited for before detecting an abnormality in the hub bearing.

It is preferable that the "predetermined time PT" used for calculating the increase rate RGI of the total gain TG from the total gain TG at each time point is a period shorter than the bearing determination reference period RPB. For example, the bearing determination reference period RPB may be set to about one month, and the "predetermined time PT" used for calculating the increase rate RGI may be set to about one week. As an example, the increase rate RGI may be the increase rate of the total gain TG per week. As for the abnormality detection system 1 (in particular, control unit 2) for which the outline has been described above, the flow of processing executed by the abnormality detection system 1 will be described next with reference to FIG. 3 to FIG. 5.

In step S1 in FIG. 3, the signal acquisition unit 20 sequentially acquires sine wave signals outputted from the sensor 30 for each wheel assembly, as pulses having a rise. The signal acquisition unit 20 samples the sine wave signals at a predetermined cycle to convert the signals into pulses such as that shown in FIG. 11 and calculates a passage time $t_i$ for each pulse. The passage time $t_i$ corresponds to a time for which a tooth (i) with a tooth number i of the rotating body 31 passes in front of the sensor 30. The passage time $t_i$ can be measured based on a signal referred to as "time stamp" that is supplied from a clock module installed in the sensor 30, for example.

Here, the pitch of each tooth of each rotating body 31 is not completely uniform, and the passage time $t_i$ during which the rotating body 31 makes one rotation varies depending on the pitch of each tooth (see FIG. 11). In step S2, the first index calculation unit 21 calculates a comparison value $x_i$ for comparing each of the passage times $t_i$ (i = 1, 2, ..., N) of the pulses for the number of teeth N corresponding to one rotation of the wheel assembly with an average passage time $t_{mean}$ thereof according to the following equation.

$$x_i = t_i/t_{mean} - 1$$

In the subsequent step S3, the first index calculation unit 21 estimates the following expression that is a signal representing the comparison value $x_i$ for one rotation of the wheel assembly (hereinafter, the signal is also referred to as $x_i$ (k) with a hat).

[Math. 1]

$$\hat{x}_i(k)$$

This can also be said to be a step for reducing noise included in the comparison value $x_i$ and modeling the comparison value $x_i$, and the estimation method is not particularly limited, but the estimation can be performed through feedback processing according to the following equation, for example.

[Math. 2]

$$\hat{x}_i(k) = \hat{x}_i(k-1) + \sigma\{x_i(k-1) - \hat{x}_i(k-1)\}$$

Here, $i$ denotes a tooth number, $\hat{x}_i(k-1)$ denotes an estimation value of $x_i(k-1)$ at one previous time, and $\sigma$ denotes an observer gain.

The estimated $x_i(k)$ with a hat is a correction coefficient for correcting the variation of the passage time $t_i$ for the tooth (i). In a state where there is no abnormality in the wheel assembly, the estimated $x_i(k)$ with a hat is a signal including a frequency component corresponding to the pitch of each tooth. That is, the estimated $x_i(k)$ with a hat is an example of the first index representing the temporal variation of the rises of the pulses for one rotation of the wheel assembly, which are sequentially acquired by the signal acquisition unit 20. The first index calculation unit 21 calculates the first index representing the temporal variation of the rises of the respective pulses corresponding to one rotation of the wheel assembly, at each time point. The first index is not limited to this, as long as the first index is an index representing the temporal variation of the rises of the pulses corresponding to one rotation of the wheel assembly.

Step S4 is a step including a loop of steps S5 to S7. In step S4, the spectrum calculation unit 22 derives the frequency spectrum of the $x_i(k)$ with a hat, which is estimated through frequency analysis, and repeats steps S5 to S7 for calculating a gain $G_j$ based on the frequency spectrum, with respect to rotational orders from the first order to an mth order. Accordingly, in step S4, the gains $G_j$ of the frequency spectrum for the rotational orders from the first order to the mth order are calculated. In particular, the spectrum calculation unit 22 performs frequency analysis on the first index ($x_i(k)$ with a hat) at each time point to calculate the frequency spectrum for the rotational orders from the first order to the mth order of this first index. Then, the spectrum calculation unit 22 calculates the "gains $G_j$ of the frequency spectrum for the rotational orders from the first order to the mth order" and, in particular, calculates the "gains $G_j$ of the frequency spectrum for the rotational orders from the first order to the mth order" at each time point. Hereinafter, processing executed in steps S5 to S7 will be described with the first loop as an example.

In the first loop, analysis is performed on the first rotational order component, that is, the component that completes one cycle corresponding to one rotation of the wheel assembly. First, the spectrum calculation unit 22 passes the $x_i(k)$ with a hat, corresponding to one rotation of the wheel assembly, through a bandpass filter to extract a component around the first rotational order (step S5).

In step S6, the spectrum calculation unit 22 applies a window function to the rotational order component extracted in step S5. This processing is for cutting out a finite section prior to calculation of the gain $G_j$ in the subsequent step S7. The window function to be applied is not particularly limited, and a known window function such as the Hanning window and the Hamming window can be applied. From the viewpoint of rapid side lobe attenuation, the Blackman window function is preferable.

In step S7, the spectrum calculation unit 22 calculates a gain $G_1$ for the first rotational order for a signal obtained by multiplying the window function in step S6. The spectrum calculation unit 22 specifies the gain $G_1$ for the first rotational order from the signal on the time axis, based on Parseval's theorem. Here, the first loop ends, and the second loop starts.

In the second loop, analysis is performed on the second rotational order component, that is, the component that completes two cycles corresponding to one rotation of the wheel assembly. The spectrum calculation unit 22 changes the frequency band of the bandpass filter in step S5 to set a bandpass filter through which the frequency band around the second rotational order component is passed. That is, in step S5 in the second loop, the component around the second rotational order is extracted from the $x_i(k)$ with a hat corresponding to one rotation of the wheel assembly and estimated in step S3. Then, steps S6 and S7 are executed in the same manner as in the first loop.

As described above, the spectrum calculation unit 22 repeats steps S5 to S7 on the component that has completed j cycles corresponding to one rotation of the wheel assembly, while changing the passage frequency band of the bandpass filter each time the number of loops increases by one. Accordingly, when all loops in step S4 are completed, the gains $G_j$ (j = 1, 2, ..., m) for the rotational orders from the first order to an mth order are calculated. In particular, the spectrum calculation unit 22 calculates the "gains $G_j$ for the rotational orders from the first order to the mth order" at each time point. The spectrum calculation unit 22 stores the calculated gains $G_j$ in the RAM 11 or the storage device 12. The processing from steps S1 to S7 is repeated on the signals for one rotation of each wheel assembly that are sequentially acquired by the signal acquisition unit 20. That is, each time the signals for one rotation of each wheel assembly are sequentially inputted, the gains $G_j$ (j = 1, 2, ..., m) are sequentially calculated.

Here, the maximum order m for the rotational order analysis is not particularly limited and may be an integer of 1 or more. From the viewpoint of improving the reliability of abnormality detection, m is preferably 10 or more. In the present embodiment, m = 20.

Referring to FIG. 4, in the subsequent step S8, the total gain calculation unit 23 calculates the total of the gains $G_j$ of predetermined multiple rotational order components of the frequency spectrum at each time point as a total gain TG at each time point. As described above, in step S4, the "gains $G_j$ for the rotational orders from the first order to the mth order (at each time point)" are stored in the RAM 11 or the storage device 12. Therefore, the total gain calculation unit 23 may calculate the total gain TG (at each time point) by executing the following processing, for example. Specifically, first, the total gain calculation unit 23 refers to the RAM 11 (or storage device 12) and acquires the "gains $G_j$ for the rotational orders from the first order to the mth order (at each time point)". Then, the total gain calculation unit 23 extracts the gains $G_j$ of the predetermined multiple rotational order components from the acquired "gains $G_j$ for the rotational orders from the first order to the mth order". The predetermined multiple rotational orders" may be all of the "rotational orders from the first order to the mth order" described above or may be a part of the "rotational orders from the first order to the mth order". The extracted rotational order components are multiple rotational order components and may be predetermined rotational order components. The predetermined multiple rotational order components preferably include, for example, rotational order components for which it is statistically confirmed that the variation of the gain $G_j$ is large between when an abnormality occurs in the wheel assembly and when no abnormality occurs in the wheel assembly.

The total gain calculation unit 23 calculates the total of the extracted "gains $G_j$ of the predetermined multiple rotational order components", as the total gain TG. The total gain TG may be the "sum (simple sum)", the "sum of absolute values", or the "sum of squares" of the extracted "gains $G_j$ of the predetermined multiple rotational order components". The total gain calculation unit 23 calculates the total gain TG as any of the "sum", the "sum of absolute values", or the "sum of squares" of the extracted "gains $G_j$ of the predetermined multiple rotational order components". In step S9, the total gain calculation unit 23 stores (saves) the total gain TG (total gain TG at each time point) calculated in step S8, in the RAM 11 or the storage device 12.

In step S10, the determination unit 24 calculates the increase rate RGI (increase amount) of the total gain TG per predetermined time PT from the total gain TG at each time point. As described above, in step S9, the "total gain TG at each time point" is stored in the RAM 11 or the storage device 12. Here, the determination unit 24 calculates the increase rate RGI of the total gain TG per predetermined time PT by executing the following processing, for example. Specifically, first, the determination unit 24 refers to the RAM 11 (or storage device 12) and acquires the "total gain TG at the current time point (in other words, the most recently stored total gain TG)" and the "total gain TG at the time point earlier than the current time point by the predetermined time PT". Then, the total gain calculation unit 23 may calculate the increase rate RGI by dividing a value obtained by subtracting the total gain TG at the time point earlier than the current time point by the predetermined time PT" from the "total gain TG at the current time point" by the predetermined time PT. When the predetermined time PT is considered as a unit time, the increase rate RGI can be understood as the change amount (increase amount) of the total gain TG per unit time (predetermined time PT).

In step S11, the determination unit 24 compares the increase rate RGI calculated in step S10 with the reference increase rate RRI and determines whether or not there is an abnormality (in the present embodiment, an abnormality in a wheel nut). This determination is performed for each of the wheel assemblies FL, FR, RL, and RR. If the increase rate RGI is less than the reference increase rate RRI for all wheel assemblies (YES in step S11), the determination unit 24 determines that there is no "abnormality in a wheel nut" in any wheel assembly, and the processing proceeds to step S13. If, for any wheel assembly, the increase rate RGI is not less than the reference increase rate RRI (NO in step S11), that is, the increase rate RGI is equal to or greater than the reference increase rate RRI, the determination unit 24 determines that an "abnormality in a wheel nut" has occurred in any wheel assembly, and the processing proceeds to step S12. In step S12, the CPU 9 executes nut abnormality notification processing. The details of the nut abnormality notification processing will be described later with reference to FIG. 5(A).

As described above, if the increase rate RGI of the total gain TG per predetermined time PT, which is calculated from the total gain TG at each time point, is equal to or greater than the reference increase rate RRI, the determination unit 24 determines that an abnormality has occurred in the wheel assembly. In the present embodiment, if the increase rate RGI calculated by ""dividing the value obtained by subtracting the "total gain TG at the time point earlier than the current point by the predetermined time PT" from the "total gain TG at the current time point" by the predetermined time PT"" is equal to or greater than the reference increase rate RRI, the determination unit 24 determines that an abnormality has occurred in the wheel assembly. However, if the number of time points when, in the predetermined time PT, the "increase amount (or increase rate) of the total gain TG from the total gain TG at the previous time point is equal to or greater than a predetermined increase amount threshold value (or predetermined increase rate threshold value)" is equal to or greater than a predetermined number, the determination unit 24 may determine that an abnormality has occurred in the wheel assembly. In addition, if a predetermined number or more of time points when, in the predetermined time PT, the "increase amount (or increase rate) of the total gain TG from the total gain TG at the previous time point is equal to or greater than a predetermined increase amount threshold value (or predetermined increase rate threshold value)" are consecutive, the determination unit 24 may determine that an abnormality has occurred in the wheel assembly. For example, if the total gain TG calculated at each time point shows an increasing tendency (tendency of increasing over time), the determination unit 24 determines that an abnormality has occurred in the wheel assembly. The increasing tendency is determined in the predetermined time PT. The increasing tendency may be determined based on the "value obtained by subtracting the "total gain TG at the time point earlier than the current point by the predetermined time PT" from the "total gain TG at the current time point"". The increasing tendency may be determined based on at least one of the number of time points when, in the predetermined time PT, the "increase amount (or increase rate) of the total gain TG from the total gain TG at the previous time point is equal to or greater than a predetermined increase amount threshold value (or predetermined increase rate threshold value)" and whether or not such time points are consecutive.

If the determination unit 24 determines in step S11 that there is an abnormality in a wheel assembly (for at least one wheel assembly, the increase rate RGI is equal to or greater than the reference increase rate RRI), the determination unit 24 may further identify the wheel assembly in which the abnormality has occurred (abnormal wheel assembly). For example, the determination unit 24 may extract the increase rate RGI having the largest value from the increase rates RGI of the total gains TG per predetermined time PT calculated for the respective wheel assemblies in step S10 and identify the wheel assembly corresponding to the extracted "increase rate RGI having the largest value" as the abnormal wheel assembly. The determination unit 24 may notify the notification unit 29 of the identified abnormal wheel assembly.

In step S13, the tightening time point information acquisition unit 25 acquires the tightening time point information IT indicating the most recent tightening time point TMS. For example, the CPU 9 operating as the tightening time point information acquisition unit 25 receives the tightening time point information IT from an ECU (e.g., the management system ECU) via the I/O interface 8.

In step S14, the determination unit 24 determines whether "the elapsed period from the most recent tightening time point TMS indicated by the tightening time point information IT is equal to or less than the bearing determination reference period RPB and the total gain TG is equal to or greater than the reference value (bearing determination reference value RVB)". That is, in step S14, the determination unit 24 determines whether the total gain TG at a time point when the elapsed period from the most recent tightening time point TMS is equal to or less than the bearing determination reference period RPB is equal to or greater than the bearing determination reference value RVB. For example, first, the determination unit 24 determines whether the "elapsed period, from the most recent tightening time point TMS, at the current time point" is equal to or less than the bearing determination reference period RPB. If the "elapsed period, from the most recent tightening time point TMS, at the current time point" exceeds the bearing determination reference period RPB, the determination unit 24 determines "NO" in step S14, and the processing returns to step S1. If the determination unit 24 determines that the "elapsed period, from the most recent tightening time point TMS, at the current time point" is equal to or less than the bearing determination reference period RPB, in step S14, the determination unit 24 then compares the total gain TG at the current time point with the bearing determination reference value RVB and determines whether there is an abnormality (in the present embodiment, an abnormality in the hub bearing). This determination is performed for each of the wheel assemblies FL, FR, RL, and RR. If the total gain TG is less than the bearing determination reference value RVB for all wheel assemblies (NO in step S14), the determination unit 24 determines that there is no "abnormality in the hub bearing" in any wheel assembly, and the processing returns to step S1. If the total gain TG is equal to or greater than the bearing determination reference value RVB for any wheel assembly (YES in step S14), the determination unit 24 determines that an "abnormality in the hub bearing" has occurred in any wheel assembly, and the processing proceeds to step S15. In step S15, the CPU 9 executes bearing abnormality notification processing. The details of the bearing abnormality notification processing will be described later with reference to FIG. 5(B).

If the determination unit 24 determines in step S14 that there is an abnormality in a wheel assembly (for at least one wheel assembly, the total gain TG is equal to or greater than the bearing determination reference value RVB), the determination unit 24 may further identify the wheel assembly in which the abnormality has occurred (abnormal wheel assembly). For example, the determination unit 24 may extract the total gain TG having the largest value from the total gains TG calculated for the respective wheel assemblies in step S8 (in particular, the most recently calculated total gains TG) and identify the wheel assembly corresponding to the extracted "total gain TG having the largest value" as the abnormal wheel assembly. In other words, the determination unit 24 may extract the "total gain TG at the current time point" having the largest value from the "total gains TG at the current time point" of the respective wheel assemblies and identify the wheel assembly corresponding to the extracted ""total gain TG at the current time point" having the largest value" as the abnormal wheel assembly. The determination unit 24 may notify the notification unit 29 of the identified abnormal wheel assembly.

(Nut Abnormality Notification Processing)

In step S1210 in FIG. 5(A), the map information acquisition unit 26 acquires the map information MPI by which the position of the vehicle VH at each time point and the position of the nut repair service provider SPN existing within a predetermined distance from the position of the vehicle VH at each time point can be specified. For example, the CPU 9 operating as the map information acquisition unit 26 receives the map information MPI from an ECU (e.g., the information system ECU) via the I/O interface 8.

In the subsequent step S1220, the nut information acquisition unit 27 acquires the nut information IN specifying a wheel nut that can replace the wheel nut in which it is determined by the determination unit 24 that an "abnormality has occurred". For example, the CPU 9 operating as the nut information acquisition unit 27 receives the nut information IN from an ECU (e.g., the management system ECU) via the I/O interface 8.

In step S1230, the notification unit 29 executes at least one of the following two notifications (first nut abnormality notification and second nut abnormality notification). The first nut abnormality notification is a notification of the following two items to the occupant(s) of the vehicle VH. Specifically, the first nut abnormality notification is a notification of a determination result that an abnormality has occurred in the wheel nut and the "position of the nut repair service provider SPN existing within a predetermined distance from the the position of the vehicle VH at the time point when the abnormality was determined to have occurred in the wheel nut" indicated by the map information MPI. The second nut abnormality notification is a notification of the following two items to the "nut repair service provider SPN existing within a predetermined distance from the position of the vehicle VH at the time point when the abnormality was determined to have occurred in the wheel nut". Specifically, the second nut abnormality notification is a notification of the determination result that an abnormality has occurred in the wheel nut and the nut information IN specifying a wheel nut that can replace the wheel nut in which the abnormality has occurred.

(Bearing Abnormality Notification Processing)

In step S1510 in FIG. 5(B), the map information acquisition unit 26 acquires the map information MPI by which the position of the vehicle VH at each time point and the position of the bearing repair service provider SPB existing within a predetermined distance from the position of the vehicle VH at each time point can be specified. For example, the CPU 9 operating as the map information acquisition unit 26 receives the map information MPI from an ECU (e.g., the information system ECU) via the I/O interface 8.

In the subsequent step S 1520, the bearing information acquisition unit 28 acquires the bearing information IB specifying a hub bearing that can replace the hub bearing in which it is determined by the determination unit 24 that the "abnormality has occurred". For example, the CPU 9 operating as the bearing information acquisition unit 28 receives the bearing information IB from an ECU (e.g., the management system ECU) via the I/O interface 8.

In step S1530, the notification unit 29 executes at least one of the following two notifications (first bearing abnormality notification and second bearing abnormality notification). The first bearing abnormality notification is a notification of the following two items to the occupant(s) of the vehicle VH. Specifically, the first bearing abnormality notification is a notification of a determination result that an abnormality has occurred in the hub bearing and the "position of the bearing repair service provider SPB existing within a predetermined distance from the position of the vehicle VH at the time point when the abnormality was determined to have occurred in the hub bearing" indicated by the map information MPI. The second bearing abnormality notification is a notification of the following two items to the "bearing repair service provider SPB existing within a predetermined distance from the position of the vehicle VH at the time point when the abnormality was determined to have occurred in the hub bearing". Specifically, the second bearing abnormality notification is a notification of a determination result that an abnormality has occurred in the hub bearing and the bearing information IB specifying a hub bearing that can replace the hub bearing in which the abnormality has occurred.

In each of the nut abnormality notification processing and the bearing abnormality notification processing, the notification unit 29 executes notification (warning output) to the occupant(s) of the vehicle VH via the display device 6. At this time, the display device 6 can output a warning so as to distinguish which wheel assembly an abnormality has occurred in, or can output a warning so as to indicate only that an abnormality has occurred in any wheel assembly. In addition, the display device 6 can also output a warning so as to distinguish between an abnormality in a wheel nut and an abnormality in a hub bearing. The warning may include a content indicating specific countermeasures for an abnormality in a wheel assembly that is considered to have occurred, such as encouraging the driver to inspect the wheel nuts or the hub bearing or encouraging the driver to replace the tire 7a (wheel nuts or hub bearing).

Here, when the control unit 2 detects an abnormality in a wheel nut, based on comparison of the increase rate RGI of the total gain TG per predetermined time PT with the reference increase rate RRI, and notifies the occupant(s) of the vehicle VH or the like of the detected abnormality, it is considered that the following operation will be performed by the occupant(s) or the like. That is, it is considered that the occupant(s) of the vehicle VH, a maintenance shop, or the like will perform, for example, replacement of the wheel nut in which the abnormality has been detected, etc., and a wheel nut (after replacement) will be properly tightened. Then, the control unit 2 determines that an abnormality has occurred in the hub bearing, if the total gain TG remains large until the bearing determination reference period RPB (e.g., one month) elapses after the replacement of the wheel nut or another measure was performed.

Therefore, the bearing determination reference value RVB for determining whether or not the "total gain TG remains large" may be set based on the total gain TG at the time point when the control unit 2 determines that the "increase rate RGI of the total gain TG is equal to or greater than the reference increase rate RRI". Alternatively, the bearing determination reference value RVB may be set based on the total gain TG at a time point immediately before the most recent tightening time point TMS. The time point immediately before the most recent tightening time point TMS is a time point immediately before the "time point when the wheel nuts were last tightened properly" and thus is considered to be a time point before the replacement of the wheel nut or another measure is performed and to be a time point when an abnormality has occurred in the wheel nut before replacement. Therefore, by using the bearing determination reference value RVB set based on the total gain TG at the time point when it was determined that the "increase rate RGI of the total gain TG is equal to or greater than the reference increase rate RRI" (or the time point immediately before the most recent tightening time point TMS), the control unit 2 achieves the following effects. Specifically, the control unit 2 can detect an abnormality in a hub bearing precisely without erroneously detecting the abnormality as an "abnormality in a wheel nut". However, it is not essential for the control unit 2 that the bearing determination reference value RVB is set based on the total gain TG at the time point when it was determined that the "increase rate RGI of the total gain TG is equal to or greater than the reference increase rate RRI" (or the time point immediately before the most recent tightening time point TMS). The bearing determination reference value RVB may be a predetermined value, or may be, for example, a predetermined value set for each wheel assembly (e.g., a value statistically calculated from the total gain TG at a time point when no abnormality has occurred).

As described above, when the control unit 2 detects an abnormality in a wheel nut and notifies the occupant(s) of the vehicle VH or the like of the abnormality, it is considered that the occupant(s) or the like will properly tighten the wheel nuts (e.g., after replacement). Therefore, the control unit 2 may set the time point when an "abnormality in a wheel nut was last detected" as the most recent tightening time point TMS. However, the most recent tightening time point TMS does not necessarily have to be the time point when an "abnormality in a wheel nut was last detected based on comparison of the increase rate RGI of the total gain TG with the reference increase rate RRI". The control unit 2 can determine an "abnormality in a hub bearing", based on the total gain TG within the bearing determination reference period RPB from the most recent tightening time point TMS when the wheel nuts were properly tightened, regardless of the time when an "abnormality in a wheel nut" was detected.

<4. Features>

The abnormality detection system 1 (in particular, control unit 2) according to the above embodiment sequentially acquires signals representing the rotation speed of each wheel assembly as pulses having a rise, and at each time point, calculates a first index representing the temporal variation of the rise of each of the pulses corresponding to one rotation of the wheel assembly. Then, the control unit 2 performs frequency analysis on the first index at each time point to calculate the frequency spectrum of the first index for rotational orders from the first order to an mth order (where m is an integer of 2 or more), for each time point, and calculates the total of the gains $G_j$ of predetermined multiple rotational order components of the frequency spectrum at each time point as the total gain TG at each time point. If the increase rate RGI of the total gain TG per predetermined time PT calculated from the total gain TG at each time point is equal to or greater than the predetermined reference increase rate RRI, the control unit 2 determines that an abnormality has occurred in the wheel assembly.

The inventor of the present invention has found that by observing the temporal change of the total gain TG at each time point, whether or not there is an abnormality in the wheel assembly can be determined earlier than in the case where the total gain TG itself at each time point is compared with a predetermined threshold value. With the abnormality detection system 1 according to the above embodiment, whether or not there is an abnormality is determined based on the increase rate RGI of the total gain TG per predetermined time PT calculated from the total gain TG at each time point. Therefore, the abnormality detection system 1 (in particular, control unit 2) can detect an abnormality occurring in the wheel assembly, earlier, based on the signals representing the rotation speed of the wheel assembly.

<5. Modifications>

Although one embodiment of the present invention has been described above, the present invention is not limited to the above embodiment, and various modifications can be made without departing from the gist of the present invention. For example, the following modifications are possible. In addition, the gist of the following modifications can be combined as appropriate.

(1) In the above embodiment, the vehicle VH is a four-wheeled vehicle, but the number of wheel assemblies is not particularly limited and may be less than four or may be five or more. The type of the vehicle VH in which the abnormality detection system 1 according to the above embodiment is installed is also not particularly limited and may be a passenger car, a commercial vehicle, or the like.

(2) In the above embodiment, the sensor unit 3 is an electromagnetic pickup-type sensor unit including a gear, a permanent magnet, and a coil. However, the sensor unit 3 is not particularly limited, as long as the sensor unit 3 can detect physical quantities that change in response to the rotation speeds of the wheel assemblies. For example, each rotating body 31 may be a permanent magnet in which N poles and S poles are arranged in a ring shape at predetermined pitches, and each sensor 30 may be a Hall element sensor, an MR (Magneto Resistive) sensor, an MI (Magneto-Impedance) sensor, or the like that detects a magnetic field. Furthermore, for example, the sensor unit 3 may be an optical sensor unit that detects light as a physical quantity. In this case, the sensor unit 3 may include a light emitting element, a sensor 30 as a light receiving element, and a disk-shaped rotating body 31 having slits formed therein at predetermined pitches in the circumferential direction.

(3) In the above embodiment, the signals representing the rotation speed are converted into pulses having a rise on the side of the control unit 2. However, the sensor unit 3 may output pulses having a rise and the signal acquisition unit 20 of the control unit 2 may acquire the pulses.

(4) The abnormality detection processing of the above embodiment is merely an example and may be changed as appropriate. For example, step S3 and step S6 may be omitted. In the case where step S3 is omitted, the comparison value $x_i$ can be used as the first index.

**Claims**

1. An abnormality detection device (2) for detecting an abnormality occurring in a wheel assembly (FL, FR, RL, RR), the abnormality detection device (2) comprising:

   a signal acquisition unit (20) configured to sequentially acquire signals representing a rotation speed of the wheel assembly (FL, FR, RL, RR), as pulses having a rise;
   a first index calculation unit (21) configured to calculate a first index representing a temporal variation of the rise of each of the pulses corresponding to one rotation of the wheel assembly (FL, FR, RL, RR), at each time point;
   a spectrum calculation unit (22) configured to perform frequency analysis on the first index at each time point to calculate a frequency spectrum of the first index for rotational orders from a first order to an mth order (where m is an integer of 2 or more), for each time point;
   a total gain calculation unit (23) configured to calculate a total of gains ($G_j$) of predetermined multiple rotational order components of the frequency spectrum at each time point, as a total gain (TG) at each time point; and
   a determination unit (24) configured to determine that an abnormality has occurred in the wheel assembly (FL, FR, RL, RR), if an increase rate (RGI) of the total gain (TG) per predetermined time (PT) calculated from the total gain (TG) at each time point is equal to or greater than a predetermined reference increase rate (RRI).

2. The abnormality detection device (2) according to claim 1, wherein

   the determination unit (24) determines that an abnormality has occurred in a wheel nut by which a wheel (7b) of the wheel assembly (FL, FR, RL, RR) is attached to a hub, as an abnormality in the wheel assembly (FL, FR, RL, RR), if the increase rate (RGI) is equal to or greater than the reference increase rate (RRI),
   the abnormality detection device (2) further comprises a tightening time point information acquisition unit (25) configured to acquire tightening time point information (IT) indicating a most recent tightening time point (TMS) that is a time point when the wheel nut was last tightened properly, and
   the determination unit (24) further determines that an abnormality has occurred in a hub bearing fixed to the hub serving as a rotation center of the wheel assembly (FL, FR, RL, RR) if the total gain (TG), at a time point when an elapsed period from the most recent tightening time point (TMS) is equal to or less than a predetermined reference period (RPB), is equal to or greater than a predetermined reference value (RVB).

3. The abnormality detection device (2) according to claim 2, further comprising:

   a map information acquisition unit (26) configured to acquire map information (MPI) by which a position, at each time point, of a vehicle (VH) including the wheel assembly (FL, FR, RL, RR) and a position of a nut repair service provider (SPN) that exists within a predetermined distance from the position of the vehicle (VH) at each time point and can repair the wheel nut, can be specified;
   a nut information acquisition unit (27) configured to acquire nut information (IN) specifying a wheel nut that can replace the wheel nut in which an abnormality has occurred; and
   a notification unit (29) configured to, if it is determined by the determination unit (24) that an abnormality has occurred in the wheel nut, perform at least one of a notification of a determination result that the abnormality has occurred in the wheel nut and the position of the nut repair service provider (SPN) to an occupant of the vehicle (VH) and a notification of the determination result that the abnormality has occurred in the wheel nut and the nut information (IN) to the nut repair service provider (SPN).

4. The abnormality detection device (2) according to claim 2 or 3, further comprising:

   a map information acquisition unit (26) configured to acquire map information (MPI) by which a position, at each time point, of a vehicle (VH) including the wheel assembly (FL, FR, RL, RR) and a position of a bearing repair service provider (SPB) that exists within a predetermined distance from the position of the vehicle (VH) at each time point and can repair the hub bearing, can be specified;

a bearing information acquisition unit (28) configured to acquire bearing information (IB) specifying a hub bearing that can replace the hub bearing in which an abnormality has occurred; and

a notification unit (29) configured to, if it is determined by the determination unit (24) that an abnormality has occurred in the hub bearing, perform at least one of a notification of a determination result that the abnormality has occurred in the hub bearing and the position of the bearing repair service provider (SPB) to an occupant of the vehicle (VH) and a notification of the determination result that the abnormality has occurred in the hub bearing and the bearing information (IB) to the bearing repair service provider (SPB).

5. An abnormality detection program for detecting an abnormality occurring in a wheel assembly (FL, FR, RL, RR), the abnormality detection program causing a computer to execute:

sequentially acquiring signals representing a rotation speed of the wheel assembly (FL, FR, RL, RR), as pulses having a rise;

calculating a first index representing a temporal variation of the rise of each of the pulses corresponding to one rotation of the wheel assembly (FL, FR, RL, RR), at each time point;

performing frequency analysis on the first index at each time point to calculate a frequency spectrum of the first index for rotational orders from a first order to an mth order (where m is an integer of 2 or more), for each time point;

calculating a total of gains ($G_j$) of predetermined multiple rotational order components of the frequency spectrum at each time point, as a total gain (TG) at each time point; and

determining that an abnormality has occurred in the wheel assembly (FL, FR, RL, RR), if an increase rate (RGI) of the total gain (TG) per predetermined time (PT) calculated from the total gain (TG) at each time point is equal to or greater than a predetermined reference increase rate (RRI).

6. An abnormality detection method, executed by a computer, for detecting an abnormality occurring in a wheel assembly (FL, FR, RL, RR), the abnormality detection method comprising:

sequentially acquiring signals representing a rotation speed of the wheel assembly (FL, FR, RL, RR), as pulses having a rise;

calculating a first index representing a temporal variation of the rise of each of the pulses corresponding to one rotation of the wheel assembly (FL, FR, RL, RR), at each time point;

performing frequency analysis on the first index at each time point to calculate a frequency spectrum of the first index for rotational orders from a first order to an mth order (where m is an integer of 2 or more), for each time point;

calculating a total of gains ($G_j$) of predetermined multiple rotational order components of the frequency spectrum at each time point, as a total gain (TG) at each time point; and

determining that an abnormality has occurred in the wheel assembly (FL, FR, RL, RR), if an increase rate (RGI) of the total gain (TG) per predetermined time (PT) calculated from the total gain (TG) at each time point is equal to or greater than a predetermined reference increase rate (RRI).

FIG. 1

FIG. 2

FIG. 3

CALCULATE ONE-PULSE PASSAGE TIME
CALCULATE AVERAGE OF ONE-PULSE PASSAGE
TIMES FOR ONE ROTATION — S1

CALCULATE RATIO XI BETWEEN EACH PULSE
PASSAGE TIME $t_i$ AND PASSAGE TIME $t_{mean}$ — S2

CALCULATE FIRST INDEX $\hat{x}_i$ — S3

BANDPASS FILTER PROCESSING LOOP
CHANGE PASSAGE FREQUENCY BAND

FIRST INDEX FOR ONE ROTATION
BANDPASS FILTER PROCESSING — S5

S4
MTH LOOP

PASS THROUGH WINDOW FUNCTION — S6

CALCULATE GAIN — S7

BANDPASS FILTER PROCESSING LOOP END

FIG. 4

FIG. 5

(A)

```
         ┌──────────┐
         │  START   │
         └────┬─────┘
              │
              ▼
   ┌─────────────────────────┐    S1210
   │ ACQUIRE MAP INFORMATION │
   └────────────┬────────────┘
                │
                ▼
   ┌─────────────────────────┐    S1220
   │ ACQUIRE NUT INFORMATION │
   └────────────┬────────────┘
                │
                ▼
```

EXECUTE AT LEAST ONE OF (1) NOTIFICATION OF DETERMINATION RESULT THAT ABNORMALITY HAS OCCURRED IN WHEEL NUT AND POSITION OF NUT REPAIR SERVICE PROVIDER, TO OCCUPANT OF VEHICLE AND (2) NOTIFICATION OF DETERMINATION RESULT THAT ABNORMALITY HAS OCCURRED IN WHEEL NUT AND NUT INFORMATION, TO NUT REPAIR SERVICE PROVIDER — S1230

```
         ┌──────────┐
         │   END    │
         └──────────┘
```

(B)

```
         ┌──────────┐
         │  START   │
         └────┬─────┘
              │
              ▼
   ┌─────────────────────────┐    S1510
   │ ACQUIRE MAP INFORMATION │
   └────────────┬────────────┘
                │
                ▼
   ┌─────────────────────────────┐  S1520
   │ ACQUIRE BEARING INFORMATION │
   └──────────────┬──────────────┘
                  │
                  ▼
```

EXECUTE AT LEAST ONE OF (1) NOTIFICATION OF DETERMINATION RESULT THAT ABNORMALITY HAS OCCURRED IN HUB BEARING AND POSITION OF BEARING REPAIR SERVICE PROVIDER, TO OCCUPANT OF VEHICLE AND (2) NOTIFICATION OF DETERMINATION RESULT THAT ABNORMALITY HAS OCCURRED IN HUB BEARING AND BEARING INFORMATION, TO BEARING REPAIR SERVICE PROVIDER — S1530

```
         ┌──────────┐
         │   END    │
         └──────────┘
```

FIG. 6

GAIN

WHEN ABNORMALITY
HAS OCCURRED

WHEN NO ABNORMALITY
HAS OCCURRED

O

ROTATIONAL
ORDER

FIG. 7

TOTAL GAIN

TENDS TO INCREASE,
IT IS DETERMINED
THAT WHEEL NUTS
ARE LIKELY TO HAVE
BECOME LOOSENED

O

TIME

23

FIG.8

TOTAL GAIN

PREDETERMINED
THRESHOLD VALUE

TIME

O

ABNORMALITY DETECTION
TIMING OF PRESENT EMBODIMENT

ABNORMALITY DETECTION TIMING
IN CASE WHERE THRESHOLD
VALUE IS USED

FIG.9

TOTAL GAIN

WHEEL ASSEMBLY (1)

WHEEL ASSEMBLY (2)

THRESHOLD VALUE (1)
FOR WHEEL ASSEMBLY (1)

THRESHOLD VALUE (2)
FOR WHEEL ASSEMBLY (2)

TIME

O

FIG. 10

FIG. 11

# EUROPEAN SEARCH REPORT

**Application Number**

EP 25 21 5172

## DOCUMENTS CONSIDERED TO BE RELEVANT

| Category | Citation of document with indication, where appropriate, of relevant passages | Relevant to claim |
|---|---|---|
| A | EP 4 253 102 B1 (SUMITOMO RUBBER IND [JP]) 1 May 2024 (2024-05-01) * paragraph [0024] - paragraph [0067]; figures 1-10 * ----- | 1-6 |
| A | WO 2020/016108 A1 (BOSCH GMBH ROBERT [DE]) 23 January 2020 (2020-01-23) * page 4 - page 15; figures 1A-2 * ----- | 1-6 |
| A | DE 10 2013 211697 A1 (BOSCH GMBH ROBERT [DE]) 24 December 2014 (2014-12-24) * paragraph [0030] - paragraph [0048]; figures 1-10 * ----- | 1-6 |

**CLASSIFICATION OF THE APPLICATION (IPC)**

INV.
B60C23/06
G01M17/013

**TECHNICAL FIELDS SEARCHED (IPC)**

B60C
G01M

The present search report has been drawn up for all claims

| Place of search | Date of completion of the search | Examiner |
|---|---|---|
| Munich | 13 May 2026 | Billen, Karl |

EPO FORM 1503 03.82 (P04C01)

## ANNEX TO THE EUROPEAN SEARCH REPORT
## ON EUROPEAN PATENT APPLICATION NO.

EP 25 21 5172

This annex lists the patent family members relating to the patent documents cited in  the above-mentioned European search report.
The members are as contained in the European Patent Office EDP file on
The European Patent Office is in no way liable for these particulars which are merely given for the purpose of information.

13-05-2026

| Patent document cited in search report | Publication date | Patent family member(s) | Publication date |
|---|---|---|---|
| EP  4253102        B1 | 01-05-2024 | EP        4253102 A1 | 04-10-2023 |
|  |  | JP        7786280 B2 | 16-12-2025 |
|  |  | JP     2023146447 A | 12-10-2023 |
|  |  | US     2023316825 A1 | 05-10-2023 |
| WO 2020016108     A1 | 23-01-2020 | BR 112021000717 A2 | 20-04-2021 |
|  |  | CN      112384384 A | 19-02-2021 |
|  |  | DE 102018212026 A1 | 23-01-2020 |
|  |  | EP        3823847 A1 | 26-05-2021 |
|  |  | WO     2020016108 A1 | 23-01-2020 |
| DE 102013211697 A1 | 24-12-2014 | BR 112015031361 A2 | 25-07-2017 |
|  |  | CN      105452836 A | 30-03-2016 |
|  |  | DE 102013211697 A1 | 24-12-2014 |
|  |  | EP        3011300 A1 | 27-04-2016 |
|  |  | JP        6099819 B2 | 22-03-2017 |
|  |  | JP     2016530488 A | 29-09-2016 |
|  |  | KR   20160022310 A | 29-02-2016 |
|  |  | MX         349626 B | 07-08-2017 |
|  |  | RU     2016101424 A | 24-07-2017 |
|  |  | US     2016163131 A1 | 09-06-2016 |
|  |  | WO     2014202443 A1 | 24-12-2014 |

EPO FORM P0459

For more details about this annex : see Official Journal of the European Patent Office, No. 12/82

**EP 4 763 541 A1**

**Patent documents cited in the description**

- JP 2023146447 A